# EUROPEAN PATENT APPLICATION

(11) **EP 4 765 675 A1**
(43) Date of publication of application: **24.06.2026**
(21) Application number: 25736212.9
(22) Date of filing: 03.01.2025
(51) Int. Cl.: H04B 7/185

(54) **SATELLITE INFORMATION COMMUNICATION METHOD AND SYSTEM, COMPUTER DEVICE AND MEDIUM**

(30) Priority: 05.01.2024 CN 202410022620
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310000 (CN)
(72) Inventor: HUANG, Guanming, Ningbo, Zhejiang 315899 (CN); SHANG, Xin, Ningbo, Zhejiang 315899 (CN); LIN, Bin, Ningbo, Zhejiang 315899 (CN); ZHANG, Qin, Ningbo, Zhejiang 315899 (CN); GUO, Min, Ningbo, Zhejiang 315899 (CN); LI, Xin, Ningbo, Zhejiang 315899 (CN)
(74) Representative: Elzaburu S.L.P.
(86) International application number: PCT/CN2025/070313
(87) International publication number: WO 2025/146111

(57) **Abstract**

The present application provides a satellite information communication method, a satellite information communication system, a computer device, and a medium. After a transmitter transmits communication information to be transmitted to a communication satellite via a satellite network, the communication information is forwarded to a designated ground monitoring system via the satellite network. When a receiver is offline in the cellular network, the communication information is transmitted to the receiver via the satellite network. This enables communication between the transmitter and the receiver solely through the satellite network, without relying on the cellular network.

## Description

This application claims priority to Chinese Patent Application No. 202410022620.9, filed on January 5, 2024, the entire contents of which are incorporated herein by reference.

### TECHNICAL FIELD

The present application relates to the field of data uploading, and in particular to a satellite information communication method, a satellite information communication system, a computer device, and a medium.

### BACKGROUND

The BeiDou Navigation Satellite System (BDS) is a global satellite positioning and communication system independently developed by China, which is the third mature satellite navigation system after the US Global Positioning System (GPS) and the Russian Global Navigation Satellite System (GNSS). The system consists of space-based, ground-based, and user-based components, providing high-precision, high-reliability positioning, navigation, and timing services to various users worldwide, 24/7.

The existing BeiDou satellite navigation system also supports certain communication capabilities. Ground devices with satellite communication functions (such as mobile phones and vehicles with satellite communication functions) can respond to communication through the satellite network. However, in the existing satellite communication logic, it is necessary to ensure that the ground devices are covered by the cellular network in order to carry out satellite communication. Therefore, how to realize a satellite information communication method that can enable ground devices to communicate with satellites without relying on the cellular network has become an urgent problem to be solved.

### SUMMARY

Based on this, in order to address the above problems, a satellite information communication method, a satellite information communication system, a computer device, and a medium for enabling satellite communication of ground device without relying on the cellular network are proposed.

The present application provides a satellite information communication method, including:
S1, transmitting communication information to be transmitted by a transmitter to a communication satellite;
S2, forwarding the communication information acquired by the communication satellite to a designated ground monitoring system; and
S3, when the ground monitoring system determines that a receiver corresponding to the communication information is offline, returning the communication information to the communication satellite and transmitting the communication information to the receiver via a satellite network.

In an embodiment, the step S3 includes:
S3a, when a satellite operation unit within the ground monitoring system receives the communication information forwarded by the communication satellite via the satellite network, forwarding the communication information to a forwarding unit within the ground monitoring system via a cellular network;
S3b, when the forwarding unit receives the communication information, temporarily storing the communication information and in response to determining that the receiver is offline via the cellular network, returning the communication information to the satellite operation unit via the cellular network;
S3c, when the satellite operation unit receives the communication information returned by the forwarding unit, returning the communication information to the communication satellite via the satellite network; and
S3d, transmitting, by the communication satellite, the received communication information to the receiver via the satellite network.

In an embodiment, after the step S3a, the method further includes:
S3e, after the forwarding unit obtains the communication information, temporarily storing the communication information and in response to determining that the receiver is online via the cellular network, transmitting the communication information to the receiver via the cellular network.

In an embodiment, the step S3b includes:
S3f, after the forwarding unit obtains the communication information, temporarily storing the communication information;
S3g, obtaining a communication device currently covered by the same cellular network as the forwarding unit and recording the communication device as a currently online device; and
S3h, when the receiver is not contained in the currently online device, determining that the receiver is offline and returning the communication information to the satellite operation unit via the cellular network.

In an embodiment, the step S3h includes:
S3i, obtaining an acquisition time point when the communication satellite acquires the communication information;
S3j, when the forwarding unit determines that the receiver is not contained in the currently online device at the acquisition time point, obtaining a set data pre-storage period, where the data pre-storage period is configured to temporarily store the communication information, and the acquisition time point is contained in the data pre-storage period; and
S3k, when the receiver is not contained in the currently online device at any time during the data pre-storage period, determining that the receiver is offline, and returning the communication information to the satellite operation unit via the cellular network.

In an embodiment, after the step S3, the method further includes:
S4, when the forwarding unit within the ground monitoring system receives a reply message returned by the receiver, obtaining a set registered satellite list, where the registered satellite list is configured to record the registered satellite equipment; and
S5, when the receiver exists in the registered satellite list, returning, by the forwarding unit, the reply message to the ground monitoring system, and returning the reply message to the transmitter via the satellite network through the ground monitoring system.

In an embodiment, after the step S4, the method further includes:
S6, when the receiver does not exist in the registered satellite list, obtaining, by the forwarding unit, a preset verification code request, and transmitting the verification code request to the receiver; and
S7, obtaining the verification code returned by the receiver, and when the verification code matches the verification code request, returning the reply message to the ground monitoring system, and returning the reply message to the transmitter via the satellite network through the ground monitoring system.

The present application further provides a satellite information communication system, including:
a first transmitting unit configured to transmit communication information that the transmitter transmits to a communication satellite via a satellite network;
a forwarding unit configured to forward the communication information acquired by the communication satellite to a designated ground monitoring system via the satellite network; and
a second transmitting unit configured to return the communication information to the communication satellite and transmit the communication information to a receiver via the satellite network when the ground monitoring system determines that the receiver corresponding to the communication information is offline.

The present application further provides a computer device, including a memory and a processor, the memory stores a computer program, and the computer program, when executed by the processor, causes the processor to perform the following steps:
S1, transmitting communication information to be transmitted by a transmitter to a communication satellite;
S2, forwarding the communication information acquired by the communication satellite to a designated ground monitoring system; and
S3, when the ground monitoring system determines that a receiver corresponding to the communication information is offline, returning the communication information to the communication satellite and transmitting the communication information to the receiver via a satellite network.

The present application further provides a computer-readable medium storing a computer program, and the computer program, when executed by a processor, causes the processor to perform the following steps:
S1, transmitting communication information to be transmitted by a transmitter to a communication satellite;
S2, forwarding the communication information acquired by the communication satellite to a designated ground monitoring system; and
S3, when the ground monitoring system determines that a receiver corresponding to the communication information is offline, returning the communication information to the communication satellite and transmitting the communication information to the receiver via a satellite network.

The present application provides a satellite information communication method, a satellite information communication system, a computer device, and a medium. After the transmitter transmits the communication information to the communication satellite via the satellite network, the communication information is forwarded to the designated ground monitoring system via the satellite network. When the receiver is offline in the cellular network, the communication information is transmitted to the receiver via the satellite network. This enables communication between the transmitter and the receiver solely through the satellite network, without relying on the cellular network. It solves the problem in the related art where the ground device must be covered by the cellular network to achieve satellite communication, thus preventing the ground device from communicating solely through the satellite network. This technology enables multiple ground devices to communicate via the satellite network.

### BRIEF DESCRIPTION OF THE DRAWINGS

In order to more clearly illustrate the technical solutions of the embodiments of the present application, the accompanying drawings used in the embodiments will be briefly introduced below. It should be understood that the following drawings only show some embodiments of the present application and should not be regarded as a limitation of the scope. For those skilled in the art, other related drawings can be obtained based on these drawings without creative effort.
FIG. 1 is a flowchart of a satellite information communication method in an embodiment.
FIG. 2 is a flowchart of a satellite information communication method in another embodiment.
FIG. 3 is a flowchart of a satellite information communication method in another embodiment.
FIG. 4 is a flowchart of a satellite information communication method in another embodiment.
FIG. 5 is a flowchart of a satellite information communication method in another embodiment.
FIG. 6 is a flowchart of a satellite information communication method in another embodiment.
FIG. 7 is a schematic diagram of the connection between a transmitter, a communication satellite, a ground monitoring system, and a receiver in an embodiment.
FIG. 8 is a schematic structural diagram of a satellite information communication system in another embodiment.
FIG. 9 is a block diagram of a computer device in an embodiment.

### DETAILED DESCRIPTION OF THE EMBODIMENTS

The technical solutions of the embodiments of the present application will be clearly and completely described below with reference to the accompanying drawings. Obviously, the described embodiments are only some embodiments of the present application, and not all embodiments. Based on the embodiments of the present application, all other embodiments obtained by those of ordinary skill in the art without creative effort are within the scope of protection of the present application.

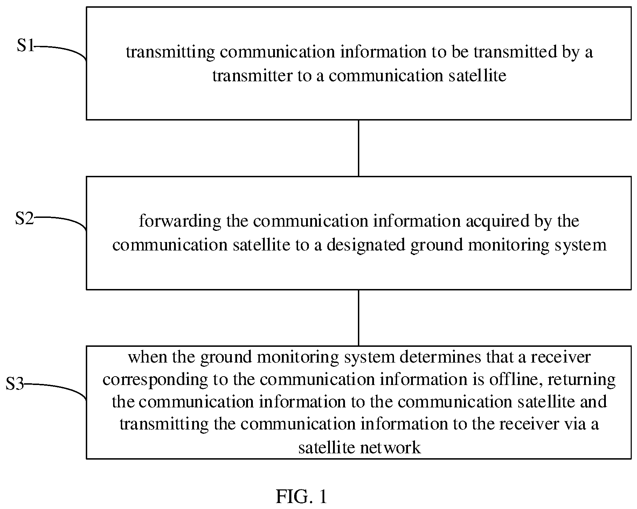

As shown in FIG. 1, the present application provides a satellite information communication method, including the following steps:
S1, transmitting communication information to be transmitted by a transmitter to a communication satellite.

As described in step S1 above, the transmitter 1 transmits the communication information input by the user, which requires communication via satellite signal, to the communication satellite via satellite signal. It can be understood that the transmitter 1 is a ground device with satellite communication function and capable of transmitting satellite signals (such as a mobile phone with satellite communication function and a vehicle with satellite communication function), so that the transmitter 1 can transmit the communication information to the communication satellite 2 via the satellite network.

S2, forwarding the communication information acquired by the communication satellite to a designated ground monitoring system.

As described in step S2 above, the communication satellite forwards the acquired communication information to the designated ground monitoring system via the satellite network. It can be understood that the ground monitoring system 3 is actually a ground base station (such as a satellite gateway station, a satellite monitoring center, and a satellite operation monitoring center) that connects each communication satellite. The ground base station itself is also covered by the cellular network and can realize information transmission via the cellular network.

S3, when the ground monitoring system determines that a receiver corresponding to the communication information is offline, returning the communication information to the communication satellite and transmitting the communication information to the receiver via a satellite network.

As described in step S3 above, the ground monitoring system 3 searches for a receiver 4 that matches the communication information via the cellular network. When the ground monitoring system 3 cannot find the receiver 4 via the cellular network, it determines that the receiver 4 is offline in the cellular network and the communication information is returned to the communication satellite 2 via the satellite network.

It is understandable that receiver 4 is actually a ground device with satellite communication and cellular network communication functions, and capable of transmitting satellite signals and cellular network signals (such as a mobile phone with satellite communication function and a vehicle with satellite communication function).

Furthermore, after the communication satellite 2 receives the communication information returned by the ground monitoring system 3 via the satellite network, the communication satellite transmits the communication information to the receiver 4 via the satellite network. It can be understood that the information transmission link between the transmitter 1 and the receiver 4 at this time is: transmitter - communication satellite - satellite operation unit - forwarding unit - satellite operation unit - communication satellite - receiver, thereby achieving the effect of data transmission between the transmitter and the receiver 4 without relying on cellular network, but solely on satellite network.

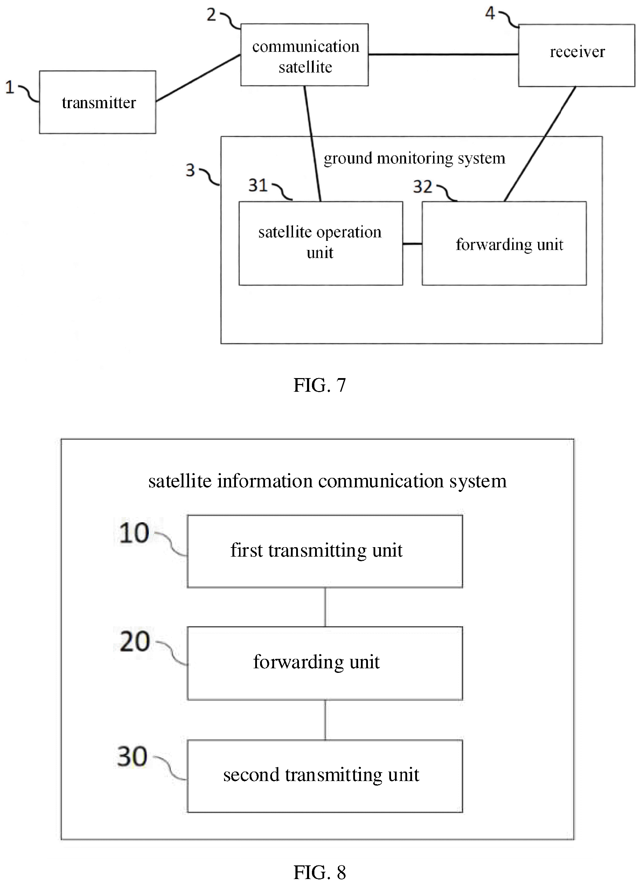

The connection diagram between the transmitter 1, the communication satellite 2, the ground monitoring system 3 (the satellite operation unit 31 and the forwarding unit 32) and the receiver 4 can be referred to FIG. 7. The transmitter 1, the communication satellite 2, the receiver 4 and the satellite operation unit 31 are covered in the satellite network, and the receiver 4 and the forwarding unit 32 are covered in the cellular network, thereby realizing the above-mentioned satellite signal transmission method.

In this embodiment, through the above method, after the transmitter transmits the communication information to the communication satellite via the satellite network, the communication information is forwarded to the designated ground monitoring system via the satellite network. When the receiver is offline in the cellular network, the communication information is transmitted to the receiver 4 via the satellite network. This enables communication between the transmitter and the receiver solely through the satellite network, without relying on the cellular network. It solves the problem in the related art where the ground device must be covered by the cellular network to achieve satellite communication, thus preventing the ground device from communicating solely through the satellite network. This technology enables multiple ground devices to communicate via the satellite network.

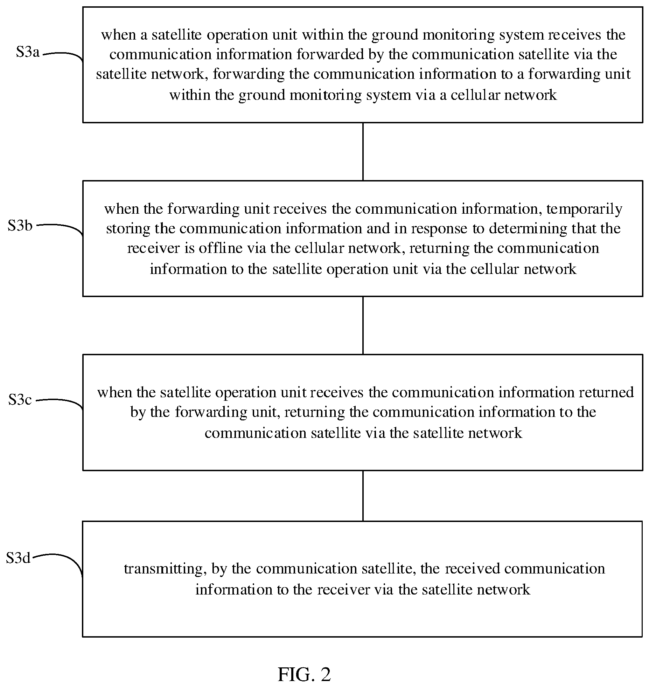

As shown in FIG. 2, in an embodiment, the step S3 includes:
S3a, when a satellite operation unit within the ground monitoring system receives the communication information forwarded by the communication satellite via the satellite network, forwarding the communication information to a forwarding unit within the ground monitoring system via a cellular network;
S3b, when the forwarding unit receives the communication information, temporarily storing the communication information and in response to determining that the receiver is offline via the cellular network, returning the communication information to the satellite operation unit via the cellular network;
S3c, when the satellite operation unit receives the communication information returned by the forwarding unit, returning the communication information to the communication satellite via the satellite network; and
S3d, transmitting, by the communication satellite, the received communication information to the receiver via the satellite network.

As described in the above embodiments, the ground monitoring system 3 includes the satellite operation unit 31 and the forwarding unit 32. It is understood that the satellite operation unit 31 is configured to connect with each communication satellite 2 via a satellite network, and the forwarding unit 32 is configured to connect with the ground device (such as the receiver 4) and the ground monitoring system 3 that supports cellular network communication functions via the cellular network. When the satellite operation unit 31 obtains the communication information returned by the forwarding unit 32 via the cellular network, it temporarily stores the communication information. When it determines that the receiver 4 is offline via the cellular network, it returns the communication information to the satellite operation unit 31 via the cellular network. Then, the satellite operation unit 31 returns the communication information to the communication satellite 2 through the satellite network. At this time, the communication satellite 2 transmits the obtained communication information to the receiver 4 through the satellite network.

In an embodiment, after the step S3a, the method further includes:
S3e, after the forwarding unit obtains the communication information, temporarily storing the communication information and in response to determining that the receiver is online via the cellular network, transmitting the communication information to the receiver via the cellular network.

As described in the above embodiments, when the satellite operation unit 31 obtains the communication information returned by the forwarding unit 32 via the cellular network, it temporarily stores the communication information and, when it determines that the receiver 4 is online via the cellular network, the communication information is transmitted to the receiver 4 via the cellular network.

It is understandable that when the receiver 4 is online in the cellular network, the information transmission link between the transmitter 1 and the receiver 4 is: transmitter 1 - communication satellite - satellite operation system - forwarding system - receiver, thereby achieving the effect of data transmission between the transmitter 1 and the receiver 4 by combining the cellular network and the satellite network.

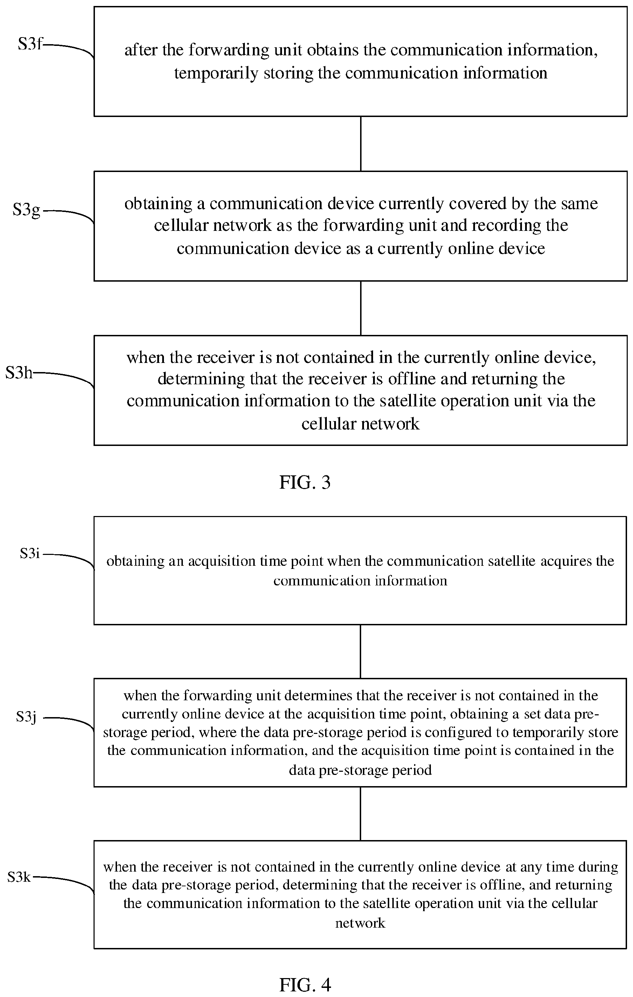

As shown in FIG. 3, in an embodiment, the step S3b includes:
S3f, after the forwarding unit obtains the communication information, temporarily storing the communication information;
S3g, obtaining a communication device currently covered by the same cellular network as the forwarding unit and recording the communication device as a currently online device; and
S3h, when the receiver is not contained in the currently online device, determining that the receiver is offline and returning the communication information to the satellite operation unit via the cellular network.

As described in the above embodiments, after the forwarding unit 32 obtains the communication information, it temporarily stores the communication information and obtains the communication device that is covered by the same cellular network as the forwarding unit 32, and records the communication device as the currently online device. It is understood that the currently online device may include the satellite operation unit 31 connected to the forwarding unit 32 via cellular signals and various ground devices (such as the receiver 4) that simultaneously support satellite signals and cellular signals. If the forwarding unit 32 determines that the receiver 4 is offline when it is not included in the currently online devices, it will return the communication information to the satellite operation unit 31 via the cellular network.

As shown in FIG. 4, in an embodiment, the step S3h includes:
S3i, obtaining an acquisition time point when the communication satellite acquires the communication information;
S3j, when the forwarding unit determines that the receiver is not contained in the currently online device at the acquisition time point, obtaining a set data pre-storage period, where the data pre-storage period is configured to temporarily store the communication information, and the acquisition time point is contained in the data pre-storage period; and
S3k, when the receiver is not contained in the currently online device at any time during the data pre-storage period, determining that the receiver is offline, and returning the communication information to the satellite operation unit via the cellular network.

As described in the above embodiments, after acquiring the communication information, the forwarding unit 32 synchronously acquires the acquisition time point of the communication satellite 2 when acquiring the communication information. Then, when the forwarding unit 32 determines that the receiver 4 is not included in the currently online device at the acquisition time point, the forwarding unit 32 acquires the set data pre-storage period. It is understood that during the data pre-storage period, the forwarding unit 32 will temporarily store the communication information. After that, the forwarding unit will continuously monitor the online status of the receiver 4. When the receiver 4 is not included in the currently online devices during the data pre-storage period, the transmitting unit will determine that the receiver 4 is offline and will return the communication information to the satellite operation unit 31 through the cellular network.

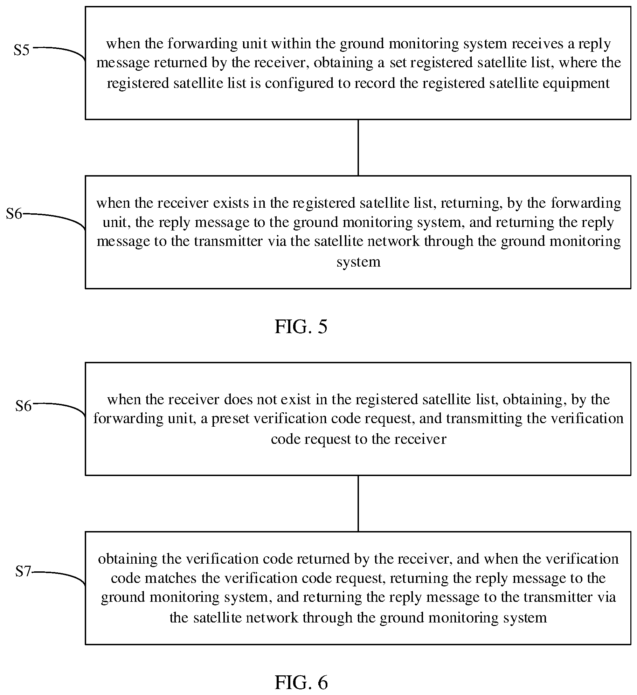

As shown in FIG. 5, in an embodiment, after the step S3, the method further includes:
S4, when the forwarding unit within the ground monitoring system receives a reply message returned by the receiver, obtaining a set registered satellite list, wherein the registered satellite list is configured to record the registered satellite equipment; and
S5, when the receiver exists in the registered satellite list, returning, by the forwarding unit, the reply message to the ground monitoring system, and returning the reply message to the transmitter via the satellite network through the ground monitoring system.

As described in the above embodiments, the ground monitoring system 3 has a pre-stored registered satellite list. It is understood that all devices covered by the satellite network (such as the transmitter 1, the receiver 4, and the communication satellite 2) are registered in the registered satellite list. Therefore, when the forwarding unit 32 determines that receiver 4 exists in the registered satellite list, that is, the receiver 4 has been registered, the forwarding unit 32 returns the reply message to the ground monitoring system 3, and then returns the reply message to the transmitter via the satellite network through the ground monitoring system 3, thereby achieving the effect of data transmission through satellite signals.

As shown in FIG. 6, in an embodiment, after the step S4, the method further includes:
S6, when the receiver does not exist in the registered satellite list, obtaining, by the forwarding unit, a preset verification code request, and transmitting the verification code request to the receiver; and
S7, obtaining the verification code returned by the receiver, and when the verification code matches the verification code request, returning the reply message to the ground monitoring system, and returning the reply message to the transmitter via the satellite network through the ground monitoring system.

As described in the above embodiments, when the forwarding unit 32 determines that the receiver 4 does not exist in the registered satellite list, the forwarding unit 32 obtains the preset verification code request and transmits the verification code request to the receiver 4. It can be understood that since the receiver 4 does not exist in the registered satellite list, the ground monitoring system 3 needs to register the receiver 4. Therefore, the ground monitoring system 3 obtains the verification code returned by the receiver 4, and when the verification code matches the verification code request, the reply message is returned to the transmitter through the satellite network, thereby realizing data transmission even when the receiver 4 is not registered.

As shown in FIG. 8, the present application further provides a satellite information communication system, for satellite communication between several ground devices, including:
a first transmitting unit 10 configured to transmit communication information that the transmitter transmits to a communication satellite via a satellite network;
a forwarding unit 20 configured to forward the communication information acquired by the communication satellite to a designated ground monitoring system via the satellite network; and
a second transmitting unit 340 configured to return the communication information to the communication satellite and transmit the communication information to a receiver via the satellite network when the ground monitoring system determines that the receiver corresponding to the communication information is offline.

The aforementioned units are responsible for executing the satellite information communication system, and will not be described in detail here.

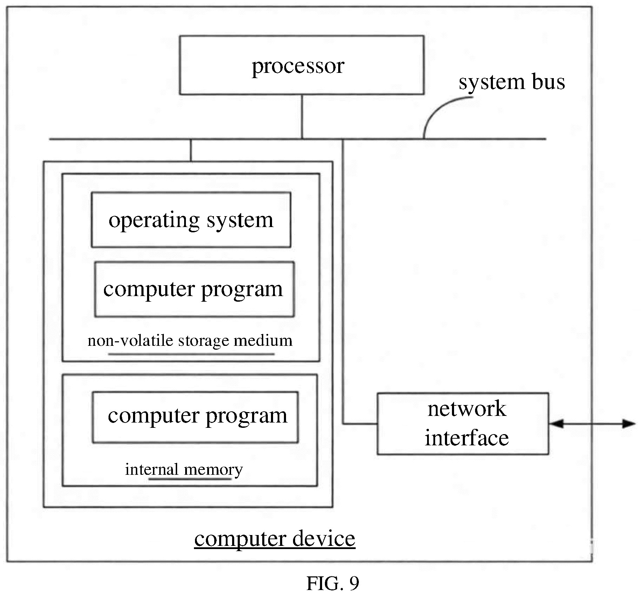

FIG. 9 illustrates the internal structure of a computer device in an embodiment. The computer device may specifically be a server, including but not limited to high-performance computers and high-performance computer clusters. As shown in FIG. 9, the computer device includes a processor, a memory, and a network interface connected via a system bus. The memory includes a non-volatile storage medium and an internal memory. The non-volatile storage medium of the computer device stores an operating system and may also store a computer program, which, when executed by a processor, enables the processor to implement the satellite information communication method. The internal memory may also store a computer program, which, when executed by a processor, enables the processor to perform the satellite information communication method.

In an embodiment, the satellite information communication method provided in the present application can be implemented as a computer program, which can run on the computer device shown in FIG. 9. The memory of the computer device can store the various program templates that make up the satellite information communication system. For example: 10-first transmitting unit, 20-forwarding unit, 30-second transmitting unit.

The present application further provides a computer device, including a memory and a processor, the memory stores a computer program, and the computer program, when executed by the processor, causes the processor to perform the following steps:
S1, transmitting communication information to be transmitted by a transmitter to a communication satellite;
S2, forwarding the communication information acquired by the communication satellite to a designated ground monitoring system; and
S3, when the ground monitoring system determines that a receiver corresponding to the communication information is offline, returning the communication information to the communication satellite and transmitting the communication information to the receiver via a satellite network.

As can be seen from the above embodiments, the greatest beneficial effect of the present application is that after the transmitter transmits the communication information to the communication satellite via the satellite network, the communication information is forwarded to the designated ground monitoring system via the satellite network. When the receiver is offline in the cellular network, the communication information is transmitted to the receiver via the satellite network. This enables communication between the transmitter and the receiver solely through the satellite network, without relying on the cellular network. It solves the problem in the related art where the ground device must be covered by the cellular network to achieve satellite communication, thus preventing the ground device from communicating solely through the satellite network. This technology enables multiple ground devices to communicate via the satellite network.

The above description is merely a specific embodiment of the present application, but the scope of the present application is not limited thereto. Any variations or substitutions that can be easily conceived by those skilled in the art within the scope of the technology disclosed in the present application should be included within the scope of the present application.

## Claims

1. A satellite information communication method, **characterized by** comprising:
S1, transmitting communication information to be transmitted by a transmitter to a communication satellite;
S2, forwarding the communication information acquired by the communication satellite to a designated ground monitoring system; and
S3, when the ground monitoring system determines that a receiver corresponding to the communication information is offline, returning the communication information to the communication satellite and transmitting the communication information to the receiver via a satellite network.

2. The satellite information communication method according to claim 1, wherein the step S3 comprises:
S3a, when a satellite operation unit within the ground monitoring system receives the communication information forwarded by the communication satellite via the satellite network, forwarding the communication information to a forwarding unit within the ground monitoring system via a cellular network;
S3b, when the forwarding unit receives the communication information, temporarily storing the communication information and in response to determining that the receiver is offline via the cellular network, returning the communication information to the satellite operation unit via the cellular network;
S3c, when the satellite operation unit receives the communication information returned by the forwarding unit, returning the communication information to the communication satellite via the satellite network; and
S3d, transmitting, by the communication satellite, the received communication information to the receiver via the satellite network.

3. The satellite information communication method according to claim 1, wherein after the step S3a, the method further comprises:
S3e, after the forwarding unit obtains the communication information, temporarily storing the communication information and in response to determining that the receiver is online via the cellular network, transmitting the communication information to the receiver via the cellular network.

4. The satellite information communication method according to claim 2, wherein the step S3b comprises:
S3f, after the forwarding unit obtains the communication information, temporarily storing the communication information;
S3g, obtaining a communication device currently covered by the same cellular network as the forwarding unit and recording the communication device as a currently online device; and
S3h, when the receiver is not contained in the currently online device, determining that the receiver is offline and returning the communication information to the satellite operation unit via the cellular network.

5. The satellite information communication method according to claim 4, wherein the step S3h comprises:
S3i, obtaining an acquisition time point when the communication satellite acquires the communication information;
S3j, when the forwarding unit determines that the receiver is not contained in the currently online device at the acquisition time point, obtaining a set data pre-storage period, wherein the data pre-storage period is configured to temporarily store the communication information, and the acquisition time point is contained in the data pre-storage period; and
S3k, when the receiver is not contained in the currently online device at any time during the data pre-storage period, determining that the receiver is offline, and returning the communication information to the satellite operation unit via the cellular network.

6. The satellite information communication method according to claim 1, wherein after the step S3, the method further comprises:
S4, when the forwarding unit within the ground monitoring system receives a reply message returned by the receiver, obtaining a set registered satellite list, wherein the registered satellite list is configured to record the registered satellite equipment; and
S5, when the receiver exists in the registered satellite list, returning, by the forwarding unit, the reply message to the ground monitoring system, and returning the reply message to the transmitter via the satellite network through the ground monitoring system.

7. The satellite information communication method according to claim 6, wherein after the step S4, the method further comprises:
S6, when the receiver does not exist in the registered satellite list, obtaining, by the forwarding unit, a preset verification code request, and transmitting the verification code request to the receiver; and
S7, obtaining the verification code returned by the receiver, and when the verification code matches the verification code request, returning the reply message to the ground monitoring system, and returning the reply message to the transmitter via the satellite network through the ground monitoring system.

8. A satellite information communication system, **characterized by** comprising:
a first transmitting unit configured to transmit communication information that a transmitter transmits to a communication satellite via a satellite network;
a forwarding unit configured to forward the communication information acquired by the communication satellite to a designated ground monitoring system via the satellite network; and
a second transmitting unit configured to return the communication information to the communication satellite and transmit the communication information to a receiver via the satellite network when the ground monitoring system determines that the receiver corresponding to the communication information is offline.

9. The satellite information communication method according to claim 1, wherein the transmitter is a ground device with satellite communication capabilities and capable of transmitting satellite signals.

10. The satellite information communication method according to claim 1, wherein the ground monitoring system is a ground base station that connects each communication satellite, and the ground base station is covered by a cellular network, enabling information transmission via the cellular network.

11. The satellite information communication method according to claim 1, wherein the receiver is a ground device with satellite communication and cellular network communication functions and capable of transmitting satellite signals and cellular network signals.

12. The satellite information communication method according to claim 2, wherein the satellite operation unit is configured to connect with each communication satellite via the satellite network, and the forwarding unit is configured to connect with the ground device and the ground monitoring system that support cellular network communication functions via the cellular network.

13. The satellite information communication method according to claim 2, wherein the transmitter, the communication satellite, the receiver, and the satellite operation unit are covered by the satellite network, and the receiver and the forwarding unit are covered by the cellular network.

14. A computer device, **characterized by** comprising a memory, a processor, and a computer program stored in the memory and executable on the processor, wherein the computer program, when executed by the processor, implements the satellite information communication method according to any one of claims 1 to 13.

15. A computer-readable storage medium storing a computer program, **characterized in that** the computer program, when executed by a processor, implements the satellite information communication method according to any one of claims 1 to 13.
